# EUROPEAN PATENT APPLICATION

(11) **EP 4 801 146 A1**
(43) Date of publication of application: **02.09.2026**
(21) Application number: 24890092.0
(22) Date of filing: 17.06.2024
(51) Int. Cl.: H04W 72/0446

(54) **METHOD FOR SENDING SEQUENCE AND COMMUNICATION APPARATUS**

(30) Priority: 13.11.2023 RU 2023129271
(71) Applicant: Huawei Technologies Co., Ltd., Shenzhen, Guangdong 518129 (CN)
(72) Inventor: HU, Yuanzhou, Shenzhen, Guangdong 518129 (CN); MIKHAIL, Potipak, Shenzhen, Guangdong 518129 (CN); WANG, Fan, Shenzhen, Guangdong 518129 (CN)
(74) Representative: MERH-IP Matias Erny Reichl Hoffmann Patentanwälte PartG mbB
(86) International application number: PCT/CN2024/099571
(87) International publication number: WO 2025/102723

(57) **Abstract**

A sequence sending method and apparatus, and a compute device are provided. The method includes: determining reference signals of at least two types; determining N first sequences corresponding to the reference signals of at least two types, where N is a positive integer greater than 1; determining a position sequence corresponding to the N first sequences; determining positions of M time units based on the position sequence, where the position sequence includes M elements, the M elements are in one-to-one correspondence with the positions of the M time units, and M is a positive integer greater than 1 and less than or equal to N; and sending the N first sequences in the M time units, where at least one first sequence is sent in each of the M time units. In the method, reference signals of multiple existing types may be multiplexed to sense a location and a velocity of a detection target, to improve sensing performance (that is, performance of an ambiguity function) while implementing integrated sensing and communication.

## Description

This application claims priority to Russian Patent Application No. 2023129271, filed on November 13, 2023 and entitled "INTEGRATED SENSING AND COMMUNICATION SEQUENCE SENDING METHOD", which is incorporated herein by reference in its entirety.

### TECHNICAL FIELD

This application relates to the communication field, and more specifically, to a sequence sending method and a communication apparatus.

### BACKGROUND

In sensing and radar systems, in addition to a location of a moving target (which may be understood as a receiving apparatus or a sensing target), a velocity (or Doppler) of the moving target also needs to be measured. In one method, a sending apparatus sends multiple sequences (sequence train) and receives signals reflected by a moving target, and the sending apparatus performs detection based on the received signals. The sending apparatus may calculate an ambiguity function of the received signals, and detect a location and a velocity of the target from the ambiguity function. An ideal ambiguity function (ambiguity function) is obtained by designing the multiple transmitted sequences. The ambiguity function may be a two-dimensional delay-Doppler ambiguity function. Sending the multiple sequences may cause the ambiguity function to generate a low ambiguity zone (low ambiguity zone) in which values of the ambiguity function is very low, or in other words, sidelobe (sidelobe) leakage is very low. Therefore, the sending apparatus can detect the location and the velocity of the moving target more accurately based on the signals reflected by the moving target.

In existing long term evolution (long term evolution, LTE) and a new radio (new radio, NR) systems, there are reference signals (pilots) for multiple purposes, and they are sent in different slots. For example, for channel measurement, there are channel state information reference signals (channel status information-reference signal, CSI-RS) over downlink and sounding reference signals (sounding reference signal, SRS) over uplink. For channel estimation, there are cell-specific reference signals (cell specific reference signal, CRS) and demodulation reference signals (demodulation reference signal, DMRS) over downlink, and DMRSs further include DMRSs used for control channels and DMRS used for data channels. For synchronization, there are primary synchronization signals (primary synchronization signal, PSS) and secondary synchronization signals (secondary synchronization signal, SSS) among downlink synchronization signals, and there are preamble (preamble) sequences over uplink. For phase noise estimation and cancellation, there are phase tracking reference signals (phase tracking reference signal, PTRS).

How to multiplex reference signals of multiple existing types to sense a location and a velocity of a detection target, to improve sensing performance (performance of an ambiguity function) while implementing integrated sensing and communication becomes a technical problem to be urgently resolved.

### SUMMARY

This application provides a sequence sending method. In the method, positions of M time units are determined by using a position sequence, and N first sequences corresponding to reference signals of at least two types are sent at the determined positions of the M time units. Because performance of sensing a location and/or a velocity of a detection target (that is, performance of an ambiguity function) is related to the positions of the M time units for sending the N first sequences, designing the positions of the M time units for sending the N first sequences can improve sensing performance (that is, the performance of the ambiguity function).

According to a first aspect, a sequence sending method is provided. The method may be performed by a network device or a terminal device, may be performed by a component of the network device or the terminal device, for example, a processor, a chip, or a chip system of the network device or the terminal device, or may be implemented by a logical module or software that can implement all or some functions of the network device or the terminal device.

The method includes: determining reference signals of at least two types; determining N first sequences corresponding to the reference signals of at least two types, where N is a positive integer greater than 1; determining a position sequence corresponding to the N first sequences; determining positions of M time units based on the position sequence, where the position sequence includes M elements, the M elements are in one-to-one correspondence with the positions of the M time units, and M is a positive integer greater than 1 and less than or equal to N; and sending the N first sequences in the M time units, where at least one first sequence is sent in each of the M time units.

The N first sequences corresponding to the reference signals of at least two types may be understood as that the N sequences are used to represent or implement functions of the reference signals of at least two types.

For example, the types of the reference signals include at least two of the following: a demodulation reference signal, a synchronization reference signal, a channel measurement reference signal, or a phase tracking reference signal.

In the foregoing technical solution, the position sequence corresponding to the N first sequences is determined, the positions of the M time units that are in one-to-one correspondence with the M elements are determined based on the M elements included in the position sequence, and the N first sequences are sent at the determined positions of the M time units. Because performance of sensing a location and/or a velocity of a detection target (that is, performance of an ambiguity function) is related to the positions of the M time units for sending the N first sequences, designing the positions of the M time units for sending the N first sequences can improve sensing performance (that is, the performance of the ambiguity function).

With reference to the first aspect, in some implementations of the first aspect, the positions of the M time units are equally spaced.

With reference to the first aspect, in some implementations of the first aspect, the positions of the M time units are unequally spaced, and the positions of the M time units are determined based on a solution of equal sums of powers.

With reference to the first aspect, in some implementations of the first aspect, differences between adjacent elements in the position sequence are the same, and the positions of the M time units are equally spaced; or differences between adjacent elements in the position sequence are not completely the same, and the positions of the M time units are unequally spaced.

With reference to the first aspect, in some implementations of the first aspect, indexes of the M time units are determined based on the M elements included in the position sequence, where the M elements correspond to the reference signals of at least two types; and the positions of the M time units are determined based on the indexes of the M time units.

With reference to the first aspect, in some implementations of the first aspect, the N first sequences are determined based on a golay complementary pair GCP.

With reference to the first aspect, in some implementations of the first aspect, the position sequence is generated based on an extension sequence, and the extension sequence is used to determine the N first sequences.

With reference to the first aspect, in some implementations of the first aspect, the N first sequences are obtained by performing phase rotation on each of N second sequences based on M phase values, where the M phase values are related to the positions of the M time units.

With reference to the first aspect, in some implementations of the first aspect, the method further includes: performing phase rotation on each of N second sequences based on M phase values to obtain the N first sequences, where the M phase values are related to the positions of the M time units.

With reference to the first aspect, in some implementations of the first aspect, the method further includes: sending L third sequences in L time units, where L is a positive integer, and the L time units are different from the M time units; and multiplexing, by using an orthogonal cover code (orthogonal cover code, OCC), the L third sequences and a first sequence that is sent in a first time unit among the M time units.

With reference to the first aspect, in some implementations of the first aspect, the L third sequences are obtained by performing phase rotation on each of L fourth sequences based on a first phase value, where the first phase value is a phase value used for phase rotation on the first sequence sent in the first time unit.

With reference to the first aspect, in some implementations of the first aspect, the method further includes: performing phase rotation on each of L fourth sequences based on a first phase value to obtain the L third sequences, where the first phase value is a phase value used for phase rotation on the first sequence sent in the first time unit.

With reference to the first aspect, in some implementations of the first aspect, the time unit includes at least one of the following symbols: a single-carrier symbol, an orthogonal frequency division multiplexing (orthogonal frequency division multiplexing, OFDM) symbol, and a single-carrier frequency division multiple access SC-FDMA symbol.

According to a second aspect, a sequence sending method is provided. The method may be performed by a network device or a terminal device, may be performed by a component of the network device or the terminal device, for example, a processor, a chip, or a chip system of the network device or the terminal device, or may be implemented by a logical module or software that can implement all or some functions of the network device or the terminal device. The method includes: determining reference signals of one type, where the type of the reference signal includes any one of the following: a demodulation reference signal, a synchronization reference signal, a channel measurement reference signal, or a phase tracking reference signal; determining N first sequences corresponding to the reference signals of the type, where N is a positive integer greater than 1; determining a position sequence corresponding to the N first sequences; determining positions of M time units based on the position sequence, where the position sequence includes M elements, the M elements are in one-to-one correspondence with the positions of the M time units, M is a positive integer greater than 1 and less than or equal to N, and M symbols are located in at least two slots; and sending the N first sequences in the M time units, where at least one first sequence is sent in each of the M time units, and M=N is satisfied.

With reference to the second aspect, in some implementations of the second aspect, the positions of the M time units are equally spaced.

With reference to the second aspect, in some implementations of the second aspect, the positions of the M time units are unequally spaced, and the positions of the M time units are determined based on a solution of equal sums of powers.

With reference to the second aspect, in some implementations of the second aspect, differences between adjacent elements in the position sequence are the same, and the positions of the M time units are equally spaced; or differences between adjacent elements in the position sequence are not completely the same, and the positions of the M time units are unequally spaced.

With reference to the second aspect, in some implementations of the second aspect, indexes of the M time units are determined based on the M elements included in the position sequence, where the M elements correspond to the reference signals of the type; and the positions of the M time units are determined based on the indexes of the M time units.

With reference to the second aspect, in some implementations of the second aspect, the N first sequences are determined based on a golay complementary pair GCP.

With reference to the second aspect, in some implementations of the second aspect, the position sequence is generated based on an extension sequence, and the extension sequence is used to determine the N first sequences.

With reference to the second aspect, in some implementations of the second aspect, the N first sequences are obtained by performing phase rotation on each of N second sequences based on M phase values, where the M phase values are related to the positions of the M time units.

With reference to the second aspect, in some implementations of the second aspect, the method further includes: performing phase rotation on each of N second sequences based on M phase values to obtain the N first sequences, where the M phase values are related to the positions of the M time units.

With reference to the second aspect, in some implementations of the second aspect, the method further includes: sending L third sequences in L time units, where L is a positive integer, and the L time units are different from the M time units; and multiplexing, by using an orthogonal cover code OCC, the L third sequences and a first sequence that is sent in a first time unit among the M time units.

With reference to the second aspect, in some implementations of the second aspect, the L third sequences are obtained by performing phase rotation on each of L fourth sequences based on a first phase value, where the first phase value is a phase value used for phase rotation on the first sequence sent in the first time unit.

With reference to the second aspect, in some implementations of the second aspect, the method further includes: performing phase rotation on each of L fourth sequences based on a first phase value to obtain the L third sequences, where the first phase value is a phase value used for phase rotation on the first sequence sent in the first time unit.

With reference to the second aspect, in some implementations of the second aspect, the time unit includes at least one of the following symbols: a single-carrier symbol, an orthogonal frequency division multiplexing OFDM symbol, and a single-carrier frequency division multiple access SC-FDMA symbol.

According to a third aspect, a sequence sending apparatus is provided, including a processing module and a sending module. The processing module is configured to determine reference signals of at least two types; the processing module is further configured to determine N first sequences corresponding to the reference signals of at least two types, where N is a positive integer greater than 1; the processing module is further configured to determine a position sequence corresponding to the N first sequences; and the processing module is further configured to determine positions of M time units based on the position sequence, where the position sequence includes M elements, the M elements are in one-to-one correspondence with the positions of the M time units, and M is a positive integer greater than 1 and less than or equal to N. The sending module is configured to send the N first sequences in the M time units, where at least one first sequence is sent in each of the M time units.

For example, the types of the reference signals include at least two of the following: a demodulation reference signal, a synchronization reference signal, a channel measurement reference signal, or a phase tracking reference signal.

With reference to the third aspect, in some implementations of the third aspect, the positions of the M time units are equally spaced.

With reference to the third aspect, in some implementations of the third aspect, the positions of the M time units are unequally spaced, and the positions of the M time units are determined based on a solution of equal sums of powers.

With reference to the third aspect, in some implementations of the third aspect, differences between adjacent elements in the position sequence are the same, and the positions of the M time units are equally spaced; or differences between adjacent elements in the position sequence are not completely the same, and the positions of the M time units are unequally spaced.

With reference to the third aspect, in some implementations of the third aspect, indexes of the M time units are determined based on the M elements included in the position sequence, where the M elements correspond to the reference signals of at least two types; and the positions of the M time units are determined based on the indexes of the M time units.

With reference to the third aspect, in some implementations of the third aspect, the N first sequences are determined based on a golay complementary pair GCP.

With reference to the third aspect, in some implementations of the third aspect, the position sequence is generated based on an extension sequence, and the extension sequence is used to determine the N first sequences.

With reference to the third aspect, in some implementations of the third aspect, the N first sequences are obtained by performing phase rotation on each of N second sequences based on M phase values, where the M phase values are related to the positions of the M time units.

With reference to the third aspect, in some implementations of the third aspect, the processing module is further configured to perform phase rotation on each of N second sequences based on M phase values to obtain the N first sequences, where the M phase values are related to the positions of the M time units.

With reference to the third aspect, in some implementations of the third aspect, the sending module is further configured to send L third sequences in L time units, where L is a positive integer, and the L time units are different from the M time units; and the processing module is further configured to multiplex, by using an orthogonal cover code OCC, the L third sequences and a first sequence that is sent in a first time unit among the M time units.

With reference to the third aspect, in some implementations of the third aspect, the L third sequences are obtained by performing phase rotation on each of L fourth sequences based on a first phase value, where the first phase value is a phase value used for phase rotation on the first sequence sent in the first time unit.

With reference to the third aspect, in some implementations of the third aspect, the processing module is further configured to perform phase rotation on each of L fourth sequences based on a first phase value to obtain the L third sequences, where the first phase value is a phase value used for phase rotation on the first sequence sent in the first time unit.

With reference to the third aspect, in some implementations of the third aspect, the time unit includes at least one of the following symbols: a single-carrier symbol, an orthogonal frequency division multiplexing OFDM symbol, and a single-carrier frequency division multiple access SC-FDMA symbol.

According to a fourth aspect, a sequence sending apparatus is provided, including a processing module and a sending module. The processing module is configured to determine reference signals of one type, where the type of the reference signal includes any one of the following: a demodulation reference signal, a synchronization reference signal, a channel measurement reference signal, or a phase tracking reference signal; the processing module is further configured to determine N first sequences corresponding to the reference signals of the type, where N is a positive integer greater than 1; the processing module is further configured to determine a position sequence corresponding to the N first sequences; and the processing module is configured to determine positions of M time units based on the position sequence, where the position sequence includes M elements, the M elements are in one-to-one correspondence with the positions of the M time units, M is a positive integer greater than 1 and less than or equal to N, and M symbols are located in at least two slots. The sending module is configured to send the N first sequences in the M time units, where at least one first sequence is sent in each of the M time units, and M=N is satisfied.

With reference to the fourth aspect, in some implementations of the fourth aspect, the positions of the M time units are equally spaced.

With reference to the fourth aspect, in some implementations of the fourth aspect, the positions of the M time units are unequally spaced, and the positions of the M time units are determined based on a solution of equal sums of powers.

With reference to the fourth aspect, in some implementations of the fourth aspect, differences between adjacent elements in the position sequence are the same, and the positions of the M time units are equally spaced; or differences between adjacent elements in the position sequence are not completely the same, and the positions of the M time units are unequally spaced.

With reference to the fourth aspect, in some implementations of the fourth aspect, indexes of the M time units are determined based on the M elements included in the position sequence, where the M elements correspond to the reference signals of the type; and the positions of the M time units are determined based on the indexes of the M time units.

With reference to the fourth aspect, in some implementations of the fourth aspect, the N first sequences are determined based on a golay complementary pair GCP.

With reference to the fourth aspect, in some implementations of the fourth aspect, the position sequence is generated based on an extension sequence, and the extension sequence is used to determine the N first sequences.

With reference to the fourth aspect, in some implementations of the fourth aspect, the N first sequences are obtained by performing phase rotation on each of N second sequences based on M phase values, where the M phase values are related to the positions of the M time units.

With reference to the fourth aspect, in some implementations of the fourth aspect, the processing module is further configured to perform phase rotation on each of N second sequences based on M phase values to obtain the N first sequences, where the M phase values are related to the positions of the M time units.

With reference to the fourth aspect, in some implementations of the fourth aspect, the sending module is further configured to send L third sequences in L time units, where L is a positive integer, and the L time units are different from the M time units; and the processing module is further configured to multiplex, by using an orthogonal cover code OCC, the L third sequences and a first sequence that is sent in a first time unit among the M time units.

With reference to the fourth aspect, in some implementations of the fourth aspect, the L third sequences are obtained by performing phase rotation on each of L fourth sequences based on a first phase value, where the first phase value is a phase value used for phase rotation on the first sequence sent in the first time unit.

With reference to the fourth aspect, in some implementations of the fourth aspect, the processing module is further configured to perform phase rotation on each of L fourth sequences based on a first phase value to obtain the L third sequences, where the first phase value is a phase value used for phase rotation on the first sequence sent in the first time unit.

With reference to the fourth aspect, in some implementations of the fourth aspect, the time unit includes at least one of the following symbols: a single-carrier symbol, an orthogonal frequency division multiplexing OFDM symbol, and a single-carrier frequency division multiple access SC-FDMA symbol.

According to a fifth aspect, a communication apparatus is provided, including at least one processor. The processor is configured to cause, by executing computer instructions stored in a memory or by using a logic circuit, the communication apparatus to perform the method according to any one of the foregoing aspects.

In some possible designs, the communication apparatus further includes a memory, configured to store computer instructions and/or a configuration file of the logic circuit. Optionally, the memory and the processor are integrated together, or the memory is independent of the processor.

According to a sixth aspect, a communication apparatus is provided, including a processor and a communication interface. The communication interface is configured to input and/or output a signal. The processor is configured to execute a computer program or instructions, to cause the communication apparatus to perform the method according to any one of the foregoing aspects.

In some possible designs, the communication interface is an interface circuit, and is configured to read and write computer instructions. For example, the interface circuit is configured to receive computer-executable instructions (where the computer-executable instructions are stored in the memory, and may be directly read from the memory, or may be read via another component), and transmit the computer-executable instructions to the processor.

In some possible designs, the communication interface is configured to communicate with a module other than the communication apparatus.

In some possible designs, the communication apparatus may be a chip or a chip system. When the apparatus is a chip system, the chip system may include a chip, or may include a chip and another discrete component.

According to a seventh aspect, a communication apparatus is provided, including a logic circuit and an interface circuit. The interface circuit is configured to input information and/or output information. The logic circuit is configured to perform the method according to any one of the foregoing aspects, and perform processing and/or generate the output information based on the input information.

According to an eighth aspect, a communication apparatus is provided. The communication apparatus may be a first apparatus, may be a module or unit (for example, a chip, a chip system, or a circuit) that is in the first apparatus and that is in one-to-one correspondence with the method/operation/step/action performed as described in the first aspect, or may be a module or unit that can be used together with the first apparatus.

For example, the first apparatus may be a terminal device, a network device, or the like.

According to a ninth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by a chip, a quantity of chips that specifically implement the method in this application is not limited in this application. For example, the method may be performed by one chip, or may be performed by two or more chips. In addition, when the method in this application is implemented by two or more chips, a chip vendor is not limited. The chips may be from a same vendor or from different vendors.

According to a tenth aspect, a computer-readable storage medium is provided. The computer-readable storage medium stores a computer program or instructions. When the computer program or the instructions are executed by a processor, the method according to any one of the foregoing aspects is performed.

According to an eleventh aspect, a computer program product is provided. When the computer program product is executed by a processor, the method according to any one of the foregoing aspects is performed.

For technical effects brought by any design scheme from the third aspect to the eleventh aspect, refer to technical effects brought by different design schemes from the first aspect or the second aspect. Details are not described herein again.

### BRIEF DESCRIPTION OF DRAWINGS

FIG. 1A and FIG. 1B are diagrams of aperiodic autocorrelation calculation;
FIG. 2 is a diagram of a structure of a communication system according to an embodiment of this application;
FIG. 3 is a block diagram of a sequence sending method according to this application;
FIG. 4 is a block diagram of equally-spaced mapping between symbols according to this application;
FIG. 5 is another block diagram of equally-spaced mapping between symbols according to this application;
FIG. 6 is another block diagram of equally-spaced mapping between symbols according to this application;
FIG. 7 is another block diagram of equally-spaced mapping between symbols according to this application;
FIG. 8 is another block diagram of equally-spaced mapping between symbols according to this application;
FIG. 9 is a block diagram of unequally-spaced mapping between symbols according to this application;
FIG. 10 is another block diagram of unequally-spaced mapping between symbols according to this application;
FIG. 11 is another block diagram of unequally-spaced mapping between symbols according to this application;
FIG. 12 is a block diagram of performing phase rotation on a transmitted sequence according to this application;
FIG. 13 is a diagram of a structure of a communication apparatus 130 according to this application; and
FIG. 14 is a diagram of a structure of a communication apparatus 150 according to this application.

### DESCRIPTION OF EMBODIMENTS

The following describes technical solutions of this application with reference to accompanying drawings.

In descriptions of this application, unless otherwise specified, "/" represents an "or" relationship between associated objects. For example, A/B may represent A or B. In this application, "and/or" describes only an association relationship between associated objects, and represents that three relationships may exist. For example, A and/or B may represent the following three cases: Only A exists, both A and B exist, and only B exists, where A and B may be singular or plural.

In addition, in the descriptions of this application, "multiple" means two or more than two unless otherwise specified. "At least one of the following items (pieces)" or a similar expression thereof indicates any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, mutual reference may be made between same or similar parts of embodiments. In various embodiments of this application, unless otherwise specified or there is a logic conflict, terms and/or descriptions in different embodiments are consistent and may be referenced by each other. Technical features in different embodiments may be combined to form a new embodiment based on an internal logical relationship. The following implementations of this application are not intended to limit the protection scope of this application.

For ease of understanding of the technical solutions in embodiments of this application, the following first briefly describes technologies related to this application.
(1) Correlation (correlation) operation: The correlation operation is a processing process performed between two sequences, and includes multiplication and addition operations performed between different elements in the two sequences. The correlation operation may include a periodic correlation operation or an aperiodic correlation operation.
(2) Autocorrelation: If two sequences are the same, a correlation operation performed between the two sequences is referred to as an autocorrelation (or an autocorrelation operation).
(3) Cross-correlation: If two sequences are different, a correlation operation performed between the two sequences is referred to as a cross-correlation (or a cross-correlation operation).
(4) Aperiodic autocorrelation: When a sequence autocorrelation is calculated, a correlation value of overlapping elements of two sequences is calculated by using a relative displacement between the sequences.

If a sequence length is L, there may be 2L-1 cases of relative displacement values between the sequences: -L+1, -L+2, ..., -1, 0, 1, ..., L-2, and L-1. Therefore, there are 2L-1 results in total for an aperiodic autocorrelation operation.

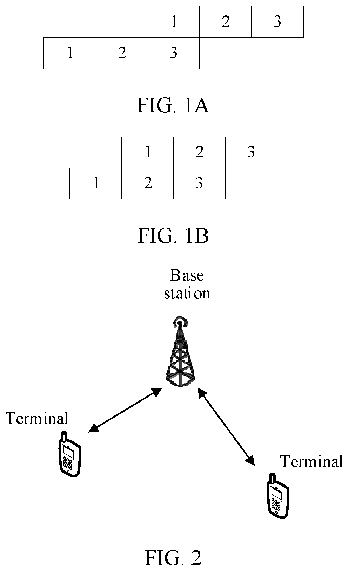

For example, for sequences [1, 2, 3], when a relative displacement value between the sequences is -2, a status of a relative position between the sequences may be shown in FIG. 1A. In this case, an aperiodic autocorrelation result is 1 × 3 = 3. When a relative displacement value between the sequences is -1, a status of a relative position between the sequences may be shown in FIG. 1B. In this case, an aperiodic autocorrelation result is 1 × 2 + 2 × 3 = 8. By analogy, when a relative displacement value between the sequences is sequentially -2, -1, 0, 1, and 2, an aperiodic autocorrelation result of the sequences is sequentially 3, 8, 14, 8, and 3.

Optionally, there may be L cases of relative displacement values in the aperiodic autocorrelation operation: 0, 1, ..., L-2, and L-1. For example, when an aperiodic autocorrelation operation is performed on a sequence *q*₁ whose length is L, a *k*^{th} value obtained based on the aperiodic autocorrelation operation (or a value obtained when a relative shift value is k) may be represented as: ${\sum }_{i = 0}^{L - k - 1} {q}_{1} \left(i\right) {q}_{1} \left(i+k\right)$,*k* = 0,1, ... , *L* - 1.

It may be understood that a processing process of an aperiodic cross-correlation operation is similar to that of the aperiodic autocorrelation operation.

### (5) Golay complementary pair (golay complementary pair, GCP)

The GCP, also known as a golay complementary pair, golay complementary sequences, or GCP sequences, is a type of perfect aperiodic autocorrelation sequences. GCP is defined as that, for a pair of sequences *x* and y with a code length of *L,* if a sum of their aperiodic autocorrelation functions (aperiodic auto correlation function, AACF) is 0 at other displacements other than at a zero displacement, the two sequences are a GCP. For the sequence *x* = [*x*(0)*, x*(1), ... , *x*(*L* - 1)], the AACF of the sequence may be defined as: ${C}_{x} \left(k\right) = {\sum }_{n = 0}^{L - 1 - k} x \left(n\right) x \left(n+k\right) , 0 \leq k \leq L - 1$

*k* represents a displacement, and represents the zero displacement when *k* is equal to 0. The AACF of the sequence *y* (represented as *C_{y}*(*k*)) is similar to the AACF of the sequence *x.* For details, refer to the descriptions of *Cₓ*(*k*). Details are not described herein again.

For example, for sequences *x* = [1,1, 1, -1] and y = [1,1, -1,1], the AACF of the sequence *x* is *Cₓ* = [4,1,0, -1], *k* = 0, ...,3 , and the AACF of the sequence y is *C_{y}* = [4, -1,0,1], *k* = 0,..,3. As *Cₓ + C_{y}* = [8,0,0,0], the sequences *x* and *y* are one GCP.

### (6) Ambiguity function (ambiguity function)

The ambiguity function may be for measuring impact of a Doppler shift and a transmission delay on a sent signal. The Doppler shift is caused by movement of a target object, and may be approximately equivalent to continuous phase rotation on a continuous-time signal sent by a sending end.

In a scenario in which multiple sequences need to be sent, a sending end may sequentially generate, based on the multiple sequences, a continuous-time signal that is to carry the multiple sequences, and send the signal. The continuous-time signal received by a receiving end may be affected by a Doppler frequency domain. Therefore, the receiving end may measure, by using an ambiguity function, impact of the Doppler shift on the sent signal (or the multiple transmitted sequences).

Sending the multiple sequences may cause an ambiguity function of the multiple sequences to generate a low ambiguity zone (low ambiguity zone). The low ambiguity zone of the ambiguity function may be determined based on a threshold. In the low ambiguity zone of the ambiguity function, values of the ambiguity function are all less than or equal to the threshold. In other words, the low ambiguity zone of the ambiguity function is a zone in which a value of the ambiguity function is less than or equal to a specific threshold.

The low ambiguity zone enables a receiver to detect a location and/or a velocity of the target object more accurately. In addition, in the low ambiguity zone, multiple target objects may be more accurately identified, and a location and/or a velocity is detected for each target object. Generally, a larger range of the low ambiguity zone indicates a larger velocity range that can be detected and more target objects that can be identified in a specific velocity range.

### (7) Equal sums of powers (equal sums of powers, ESP or equal sums of like powers, ESLP)

Equal sums of powers may mean that results obtained by performing an exponentiation operation using a same power (power) on elements in two unequal sequences and then summation are equal. In other words, the equal sums of powers problem is to find a set of solutions (or referred to as two sequence solutions) *S*₀ and *S*₁ . *S*₀ = [*s*₀(0), *s*₀(1), ... , *s*₀(*N*₀ - 1)], and *S*₁ = [*s*₁(0), *s*₁(1), ... , *s*₁(*N*₁ - 1)], where *N*₀ and *N*₁ are positive integers greater than or equal to 1. The set of solutions *S*₀ and *S*₁ satisfies: ${\sum }_{i = 0}^{{N}_{0} - 1} {\left[{s}_{0}\left(i\right)\right]}^{k} = {\sum }_{j = 0}^{{N}_{1} - 1} {\left[{s}_{1}\left(j\right)\right]}^{k} , k = 1 , … , K$

*K* may be referred to as degree (degree), or degree of equal sums of powers, or degree of a solution of equal sums of powers, or degree of a solution, where *K* is a positive integer greater than 0.

Optionally, values of the solutions *S*₀ and *S*₁ of equal sums of powers are typically integers. It is sure that the values of *S*₀ and *S*₁ may also be extended to real numbers. In addition, a value range of *k* in the foregoing formula may also be from 0 to *K.* When *k = 0, N*₀ *= N*₁.

In sensing and radar systems, in addition to a location of a moving target (which may be understood as a receiving apparatus or a sensing target), a velocity (or Doppler) of the moving target also needs to be measured. In one method, a sending apparatus sends multiple sequences (sequence train) and receives a signal reflected by a moving target, and the sending apparatus performs detection based on the received signal. The sending apparatus may calculate an ambiguity function of the received signal, and detect a location and a velocity of the target from the ambiguity function. An ideal ambiguity function (ambiguity function) is obtained by designing the multiple transmitted sequences. The ambiguity function may be a two-dimensional delay-Doppler ambiguity function.

Sending the multiple sequences may cause the ambiguity function to generate a low ambiguity zone (low ambiguity zone). In the low ambiguity zone, a value of the ambiguity function is very low, or in other words, sidelobe (sidelobe) leakage is very low. Therefore, the sending apparatus can detect the location and the velocity of the moving target more accurately based on the signal reflected by the moving target.

Generally, a larger range of the low ambiguity zone indicates that a larger velocity range of a moving target can be detected. In addition, for moving objects in a specific velocity range, more moving objects can be identified. A larger quantity of transmitted sequences indicates better performance of the ambiguity function and a larger range of the low ambiguity zone. Longer duration of the transmitted sequence indicates higher resolution (precision) of detecting a moving velocity of a moving target.

In existing long term evolution (long term evolution, LTE) and new radio (new radio, NR) systems, there are reference signals (that is, pilots) for multiple purposes, and they may be sent in different slots. For example, for channel measurement, there are channel state information reference signals (channel status information-reference signal, CRI-RS) over downlink, and there are sounding reference signals (sounding reference signal, SRS) over uplink. For channel estimation, there are cell-specific reference signals (cell specific reference signal, CRS) and demodulation reference signals (demodulation reference signal, DMRS) over downlink, and DMRSs further include DMRS used for estimating control channels and DMRSs used for estimating data channels. For synchronization, there are primary synchronization signals (primary synchronization signal, PSS) and secondary synchronization signals (secondary synchronization signal, SSS) among downlink synchronization signals, and there are preambles (preamble) sequence over uplink. For phase noise estimation and cancellation, there are phase tracking reference signals (phase tracking reference signal, PTRS).

An embodiment of this application provides a sequence sending method. In the method, reference signals of multiple existing types may be multiplexed to sense a location and a velocity of a detection target, to improve sensing performance (that is, performance of an ambiguity function) while implementing integrated sensing and communication.

The method provided in embodiments of this application may be applied to various communication systems. The communication system may be a global system for mobile communications (global system for mobile communications, GSM), a 3rd generation partnership project (3rd generation partnership project, 3GPP) communication system, for example, a 4th generation (4th generation, 4G) or 5th generation (5th generation, 5G) mobile communication system, or a 6th generation (6th generation, 6G) mobile communication system that evolves from 5G, a vehicle to everything (vehicle to everything, V2X) system, a device-to-device (device-to-device, D2D) communication system, a machine-to-machine (machine-to-machine, M2M) communication system, an internet of things (internet of things, IoT), a narrowband internet of things (narrow band-internet of things, NB-IoT), another next-generation communication system, an integrated sensing and communication system, a satellite communication system, an enhanced data rate for GSM evolution (enhanced data rate for GSM evolution, EDGE) system, a wideband code division multiple access (wideband code division multiple access,WCDMA) system, a code division multiple access 2000 (code division multiple access, CDMA2000) system, a time division-synchronous code division multiple access (time division-synchronous code division multiple access, TD-SCDMA) system, a long term evolution (long term evolution, LTE) system, and three major application scenarios of a next-generation 5G mobile communication system: eMBB, ultra-reliable and low latency communications (ultra-reliable and low latency communications, URLLC), and eMTC. The communication system may alternatively be a non-3GPP communication system, for example, a wireless local area network (wireless local area network, WLAN) system such as a wireless fidelity (wireless fidelity, Wi-Fi) system. This is not limited.

The technical solutions in embodiments of this application may be applied to various communication scenarios, for example, a sensing scenario.

The foregoing communication systems and communication scenarios to which this application is applicable are merely examples for description, communication systems and communication scenarios to which this application is applicable are not limited thereto, and the foregoing descriptions do not constitute any limitation on the solutions of this application.

FIG. 2 is a diagram of a structure of a communication system according to an embodiment of this application. The communication system includes at least one terminal device and at least one network device. For ease of description, an example in which two terminal devices and one network device are included is used for description in FIG. 2.

The terminal device in embodiments of this application may be a user-side device, for example, a terminal or a chip that may be used in the terminal, configured to implement a wireless communication function. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a public land mobile network (public land mobile network, PLMN) that evolves from 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, an uncrewed aerial vehicle, a robot, a smart point of sale (point of sale, POS) machine, customer premises equipment (customer-premises equipment, CPE) or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), or the like. Alternatively, the terminal may be a terminal having a communication function in the IoT, for example, a terminal in V2X (for example, an Internet of Vehicles device), a terminal in D2D communication, or a terminal in M2M communication. The terminal may be mobile or stationary.

The network device in embodiments of this application is a device that connects the terminal device to a wireless network. The network device may be referred to as a node in a radio access network (radio access network, RAN), or may be referred to as a radio access network node (or device). A communication system may include multiple network devices, and the network devices may be nodes of a same type or nodes of different types.

In some possible scenarios, the network device may include an evolved NodeB (NodeB, eNB, or e-NodeB, evolved NodeB) in a long term evolution (long term evolution, LTE) system or an LTE-advanced (LTE-advanced, LTE-A) system, for example, a conventional macro-eNB, and a micro-eNB in a heterogeneous network scenario. Alternatively, the access network device may include a next generation NodeB (next generation NodeB, gNB) in a new radio (new radio, NR) system. Alternatively, the network device may include a transmission reception point (transmission reception point, TRP), a home NodeB (for example, a home evolved NodeB or a home NodeB, HNB), a baseband unit (baseband unit, BBU), a baseband unit pool (BBU pool), a wireless fidelity (wireless fidelity, Wi-Fi) access point (access point, AP), or the like. Alternatively, the network device may include a base station in a non-terrestrial network (non-terrestrial network, NTN), to be specific, may be deployed on a flying platform or a satellite. In the NTN, the network device may serve as a layer 1 (L1) relay (relay), may serve as a base station, or may serve as an integrated access and backhaul (integrated access and backhaul, IAB) node. Alternatively, the network device may be a device that is in an IoT and that implements functions of a base station, for example, a device that is in uncrewed aerial vehicle communication, V2X, D2D, or machine-to-machine (machine-to-machine, M2M) and that implements the functions of the base station.

In some possible scenarios, the network device may alternatively be a module or unit that can implement some functions of a base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of the software module and the hardware module.

For example, in the CU-DU architecture and the ORAN architecture, the network device may be divided into modules. The method provided in this application may be performed by a same module, or may be performed by different modules. This is not specifically limited in this application.

Optionally, the CU and the DU may be obtained through division based on protocol layers of a wireless network. For example, functions of a packet data convergence protocol (packet data convergence protocol, PDCP) layer and protocol layers (for example, a radio resource control (radio resource control, RRC) layer and a service data adaptation protocol (service data adaptation protocol, SDAP) layer) above the PDCP layer are set on the CU, and functions of a protocol layer (for example, a radio link control (radio link control, RLC) layer, a media access control (media access control, MAC) layer, or a physical (physical, PHY) layer) below the PDCP layer are set on the DU. For another example, functions of a protocol layer above the PDCP layer are set on the CU, and functions of the PDCP layer and a protocol layer below the PDCP layer are set on the DU. This is not limited.

The division into processing functions of the CU and the DU based on protocol layers is merely an example, and may be division in another manner. For example, the CU or the DU may have functions of more protocol layers through division. For another example, the CU or the DU may have some processing functions of protocol layers through division. For example, part of functions of the RLC layer and a function of a protocol layer above the RLC layer are set on the CU, and remaining functions of the RLC layer and a function of a protocol layer below the RLC layer are set on the DU. For another example, division into functions of the CU or the DU may alternatively be performed based on service types or other system requirements. For example, division may be performed based on latencies. Functions whose processing time needs to meet a latency requirement are set on the DU, and functions whose processing time does not need to meet the latency requirement are set on the CU.

Optionally, the base station in embodiments of this application may include various forms of base stations, for example, a macro base station, a micro base station (also referred to as a small cell), a relay station, an access point, a home NodeB, a TRP, a transmission point (transmission point, TP), and a mobile switching center. This is not specifically limited in embodiments of this application.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

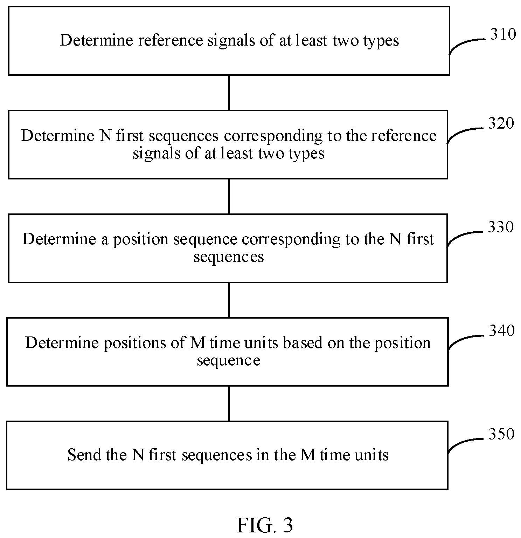

With reference to FIG. 3, the following describes in detail the method provided in embodiments of this application. It may be understood that, in embodiments of this application, these steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

FIG. 3 is a block diagram of a sequence sending method according to this application. As shown in FIG. 3, the method may include steps 310 to 350. The following describes steps 310 to 350 in detail.

It should be understood that the method in FIG. 3 may be performed by the terminal device or the network device in FIG. 2. This is not specifically limited in this embodiment of this application.

Step 310: Determine reference signals of at least two types.

In this embodiment of this application, types of to-be-sent reference signals of at least two types may be determined. The reference signal may be a reference signal sequence in an existing long term evolution (long term evolution, LTE) system or new radio (new radio, NR) system. This is not limited in this application. The types of the reference signals include but are not limited to: a demodulation reference signal, a synchronization reference signal, a channel measurement reference signal, or a phase tracking reference signal. For details of the types of the reference signals, refer to the foregoing descriptions. Details are not described herein again.

It should be understood that determining reference signals of at least two types may also be referred to as determining at least two types of reference signals.

It should be further understood that a type of a reference signal may also be referred to as a reference signal type for short.

Step 320: Determine N first sequences corresponding to the reference signals of at least two types.

For example, N is a positive integer greater than 1.

One first sequence corresponds to a reference signal of one type. In this case, it may also be stated that the first sequence includes the reference signal of this type.

The reference signals of at least two types may also be referred to as the at least two types of reference signals.

Step 330: Determine a position sequence corresponding to the N first sequences.

In this embodiment of this application, the position sequence corresponding to the N first sequences may be determined, and the position sequence is used to determine positions of M time units. The following describes in detail a method for determining the position sequence with reference to a specific example. Details are not described herein again.

Step 340: Determine positions of M time units based on the position sequence.

For example, M is a positive integer greater than 1 and less than or equal to N.

In this embodiment of this application, indexes of the M time units may be determined based on M elements included in the position sequence, where the M elements correspond to the reference signals of at least two types; and the positions of the M time units are determined based on the indexes of the M time units.

In an example, if differences between adjacent elements in the position sequence are the same, the positions of the at least two symbols are equally spaced.

In another example, if differences between adjacent elements in the position sequence are not completely the same, the positions of the at least two symbols are not equally spaced. The following describes the positions of the M time units in detail with reference to specific embodiments. Details are not described herein.

In this embodiment of this application, the time unit may be a symbol, and one time unit may include at least one symbol. The symbol may be a single-carrier (single-carrier) symbol, a single-carrier quadrature amplitude modulation (single-carrier quadrature amplitude modulation, SC-QAM) symbol, a single-carrier frequency division multiple access (single-carrier frequency division multiple access, SC-FDMA) symbol, or an orthogonal frequency division multiplexing OFDM symbol.

Step 350: Send the N first sequences in the M time units.

For example, at least one first sequence is sent in each of the M time units.

In an example, it is assumed that the steps in FIG. 3 are performed by a network device. The sending process in step 350 is downlink transmission. In a possible implementation, the N first sequences include a demodulation reference signal, and the demodulation reference signal DMRS is a downlink demodulation reference signal, which may be a DMRS for a downlink control channel or a DMRS for a downlink data channel. In another possible implementation, the N first sequences include a synchronization reference signal, and the synchronization reference signal is a PSS and/or an SSS. In another possible implementation, the N first sequences include a channel measurement reference signal, and the channel measurement reference signal is a CSI-RS. In another possible implementation, the N first sequences include a phase tracking reference signal, and the phase tracking reference signal is a downlink PTRS.

In another example, it is assumed that the steps in FIG. 3 are performed by a terminal device. The sending process in step 350 is uplink transmission. In a possible implementation, the N first sequences include a demodulation reference signal, and the demodulation reference signal DMRS is an uplink demodulation reference signal, which may be a demodulation reference signal for an uplink control channel or a DMRS for an uplink data channel. In another possible implementation, the N first sequences include a synchronization reference signal, and the synchronization reference signal is a preamble sequence. In another possible implementation, the N first sequences include a channel measurement reference signal, and the channel measurement reference signal is an SRS. In another possible implementation, the N first sequences include a phase tracking reference signal, and the phase tracking reference signal is an uplink PTRS.

In this embodiment of this application, each of the N first sequences may be determined based on a sequence in a GCP, or may be determined based on another sequence. This is not specifically limited in this embodiment of this application. For example, the first sequence is determined based on a sequence in a GCP, and a golay sequence may be used for the demodulation reference signal, the synchronization reference signal, the channel measurement reference signal, and the phase tracking reference signal.

In the foregoing technical solution, because a network device or a terminal device in an existing system keeps sending sequences corresponding to reference signals of various types, a sensing function is implemented by using multiple existing types of reference signal sequences, so that a quantity of reference signal sequences used for sensing can be increased, and performance of an ambiguity function, that is, sensing performance, is improved. In addition, because the performance of the ambiguity function is related to a relative position between transmitted sequences, a position relationship between symbols on which reference signals of multiple types are located is determined by using a position sequence, significantly improving the performance of the ambiguity function.

Optionally, in some embodiments, phase rotation may be further performed on each of N second sequences based on M phase values to obtain the N first sequences, where the M phase values are related to the positions of the M time units.

In this embodiment of this application, the N second sequences are reference signals of any one or more of the following types: a demodulation reference signal, a synchronization reference signal, a channel measurement reference signal, and a phase tracking reference signal.

Optionally, in some embodiments, L third sequences may be further sent in L time units, where L is a positive integer, and the L time units are different from the M time units; and the L third sequences and a first sequence that is sent in a first time unit among the M time units are multiplexed by using an orthogonal cover code OCC.

In this embodiment of this application, the L third sequences are reference signals of any one or more of the following types: a demodulation reference signal, a synchronization reference signal, a channel measurement reference signal, and a phase tracking reference signal.

Optionally, in some embodiments, phase rotation is performed on each of L fourth sequences based on a first phase value to obtain the L third sequences, where the first phase value is a phase value used for phase rotation on the first sequence sent in the first time unit.

In this embodiment of this application, the L fourth sequences are reference signals of any one or more of the following types: a demodulation reference signal, a synchronization reference signal, a channel measurement reference signal, and a phase tracking reference signal.

For example, duration (or referred to as a time length) of one time unit may be represented as *Lᵤ* × *Tₛ. Tₛ* represents a unit of time (or referred to as a sampling interval). *Tₛ* may be determined based on a subcarrier spacing. For example, when the subcarrier spacing is 15 kilohertz (kHz), *Tₛ* may be 1/(2048 × 15000) second (s).

*Lᵤ* may be understood as a quantity of discrete points (or referred to as sampling points) in a time unit, and a time interval between any two adjacent discrete points is *Tₛ.* In other words, *Lᵤ* discrete points (or discrete time domain positions) may be obtained by dividing (or sampling) the time unit at an interval of *Tₛ.*

Optionally, a value of *Lᵤ* may be greater than or equal to a length of a sequence sent in the time unit.

In addition, *Lᵤ* may also be referred to as a length of a time unit. In other words, in embodiments of this application, the duration of the time unit may be a continuous time length, and the length of the time unit may be the quantity of discrete points. The length of the time unit being *Lᵤ* may also be understood as that *Lᵤ* discrete values may be sent in the time unit.

Optionally, one time unit may be one SC-FDMA symbol or one OFDM symbol. For example, duration of one SC-FDMA symbol or one OFDM symbol is *Lᵤ* × *Tₛ.*

For example, one time unit includes one SC-FDMA symbol, and one first sequence is sent in one time unit. Fourier transform may be performed on the first sequence to generate frequency domain data, and then inverse Fourier transform is performed on the frequency domain data to obtain a time domain signal of the time unit. A quantity of points of the Fourier transform is the same as a length of the first sequence. Duration of the time domain signal obtained based on inverse Fourier transform may be *LᵤTₛ.* The length of the first sequence does not exceed *Lᵤ.*

Optionally, one time unit may include at least one single-carrier symbol or SC-QAM symbol. For example, when the length of one time unit is *Lᵤ,* the time unit may include *Lᵤ* single-carrier symbols or include *Lᵤ* SC-QAM symbols. One value (for example, one complex value) may be sent on each single-carrier symbol or each SC-QAM symbol. Duration of each single-carrier symbol or each SC-QAM symbol is *Tₛ.*

For example, one first sequence is sent in one time unit, one time unit includes *Lᵤ* single-carrier symbols, and the length of the first sequence is the same as *Lᵤ.* In this case, one value (for example, one complex value) may be sent on each single-carrier symbol in one time unit, and the value sent on each single-carrier symbol in one time unit corresponds to one element of one first sequence.

Optionally, one time unit may further include a cyclic prefix (cyclic prefix, CP).

For example, the following uses an example in which one time unit includes one SC-FDMA symbol or one OFDM symbol for description. The N first sequences are sent on *N_{symb}* symbols. It may be understood that M *= N_{symb}* because one time unit includes one symbol.

Specifically, *N_{symb}* first reference signal sequences are sent on *N_{symb}* symbols, the *N_{symb}* symbols are in one-to-one correspondence with the *N_{symb}* first reference signal sequences, and each of the *N_{symb}* first reference signal sequences corresponds to at least one first sequence. It should be understood that *N_{symb}* is a positive integer greater than 1.

For example, the *N_{symb}* first reference signal sequences include (that is, correspond to) reference signals of *N_{type}* types, where *N_{type}* is a positive integer.

Optionally, when the *N_{symb}* symbols are in one slot or one subframe, the *N_{symb}* first reference signal sequences include reference signals of at least two types.

Optionally, when the *N_{symb}* symbols are in multiple slots or multiple subframes, reference signal sequences on the *N_{symb}* symbols may be sent through multiple transmissions (for example, a signal in one slot is sent during each transmission), and the *N_{symb}* first reference signal sequences include reference signals of at least one type.

Reference signals of multiple types are included on the multiple symbols. Compared with a case in which reference signals of only one type are included, a quantity of sent reference signals and a quantity of symbols may be increased, improving sensing and detection performance (that is, a larger quantity of symbols indicates that a peak value of a calculated ambiguity function is easier to determine, and performance of the ambiguity function is improved). In addition, when reference signals of only one existing type are included, a position of a symbol to which the first reference signal sequence can be mapped is limited. By using reference signals of multiple existing types, the position of the symbol to which the first reference signal sequence can be mapped can be more flexibly designed, improving the performance of the ambiguity function.

Optionally, one first reference signal sequence includes a reference signal of one type. In other words, a reference signal of one type is transmitted on one symbol. In this case, if *N_{type} >* 1, that is, the *N_{symb}* first reference signal sequences include reference signals of at least two types, reference signals of different types are located on different symbols.

Optionally, *N_{type} >* 1, and one first reference signal sequence includes reference signals of at least two types. That is, reference signals of at least two types are located on a same symbol. In this case, frequency division or code division may be used for the reference signals of at least two types transmitted on the same symbol. This is not specifically limited in this embodiment of this application.

In this embodiment of this application, positions of the *N_{symb}* symbols for sending a reference signal sequence may be determined based on a position sequence, and positions of symbols on which the *N_{symb}* first reference signal sequences are located in the *N_{symb}* symbols are determined based on the position sequence.

The position sequence may be represented as *I,* where *I* includes *N_{symb}* elements (that is, the M elements) that are in one-to-one correspondence with the positions of the *N_{symb}* symbols, and similarly, are in one-to-one correspondence with the *N_{symb}* first reference signal sequences.

The following describes generation and features of the foregoing position sequence by using an example.

For ease of description, it is assumed that the elements in the position sequence I are arranged in ascending order, and the *N_{symb}* elements in the position sequence I are in one-to-one correspondence with the positions of the *N_{symb}* symbols. The *N_{symb}* symbols may be included in *N_{slot,tx}* slots (or subframes), and one slot (or subframe) includes ${N}_{symb}^{slot}$ symbols, where *N_{slot,tx}* and ${N}_{symb}^{slot}$ are positive integers.

Symbol indexes in a slot may be defined as from 0 to ${N}_{symb}^{slot} - 1$Inter-slot symbol indexes may be defined. For *Nₛₗₒₜ* consecutive slots, all symbols in a 0^{th} slot to an (*Nₛₗₒₜ -* 1)^{th} slot are numbered in ascending order. For example, one slot includes ${N}_{symb}^{slot}$ symbols, and a number (that is, an index) of a start symbol (that is, a 0^{th} symbol in the 0^{th} slot) of the *Nₛₗₒₜ* slots is 0. Inter-slot symbol indexes of the *Nₛₗₒₜ* slots are 0 to ${N}_{slot} {N}_{symb}^{slot} - 1$, where *Nₛₗₒₜ* is a positive integer.

Optionally, *Nₛₗₒₜ* is greater than 1, the *Nₛₗₒₜ* slots include *N_{slot,tx}* slots, and *Nₛₗₒₜ* ≥ *N_{slot,tx}.*

For example, the index of the start symbol (that is, the 0^{th} symbol in the 0^{th} slot) of the *Nₛₗₒₜ* slots is represented as *lₛₜₐᵣₜ.* An inter-slot symbol index corresponding to an *nₛₗₒₜ*^{th} slot may be represented as ${l}_{slat} + l + {n}_{slot} ⋅ {N}_{symb}^{slot}$*,* where *l* is a symbol index in one slot, and a value of *l* ranges from 0 to ${N}_{symb}^{slot} - 1$.

In this embodiment of this application, a reference signal sequence may be sent on the *N_{symb}* symbols of the *N_{slot,tx}* slots, where the *N_{slot,tx}* slots are *N_{slot,tx}* slots in the *Nₛₗₒₜ* consecutive slots. It may be understood that, after the inter-slot symbol indexes corresponding to the *N_{symb}* symbols are determined, the positions of the *N_{symb}* symbols for sending the reference signal may be determined in the *Nₛₗₒₜ* slots.

Optionally, the *N_{symb}* elements in the position sequence *I* are the inter-slot symbol indexes corresponding to the *N_{symb}* symbols.

In an implementation, differences between adjacent elements in the position sequence *I* are the same. It may be understood that, in this case, the positions of the *N_{symb}* symbols are equally spaced, that is, the distances between two adjacent symbols in the *N_{symb}* symbols are the same.

For example, a p^{th} value of the position sequence I (represented as *I*(*p*)) satisfies: $I \left(p\right) = p \times K , p = 0 , … , {N}_{symb} - 1$ or $I \left(p\right) = p \times K + {Δ}_{offset} , p = 0 , … , {N}_{symb} - 1$

A sequence P may be defined. When differences between adjacent elements in the position sequence *I* are the same, *P*(*p*) *= p* is satisfied.

Δ*_{offset}* is an offset and Δ*_{offset}* is an integer. K is a spacing factor, and a value of K determines the difference between adjacent elements in the position sequence *I*, where K is a positive integer. Δ*_{offset}* and K may be predefined or indicated based on signaling. For example, the value of K is 4 or 8. Optionally, a possible value of Δ*_{offset}* is one or more values from 0 to *K* - 1.

For example, *N_{symb} =* 14, and *K =* 4. In this case, the position sequence is *I =* [0,1,2,3,4,5,6,7,8,9,10,11,12,13] × 4.

In an implementation, differences between adjacent elements in the position sequence *I* may be different. It may be understood that, in this case, the positions of the *N_{symb}* symbols are unequally spaced, that is, the distances between two adjacent symbols in the *N_{symb}* symbols may be different.

For example, a p^{th} value of the position sequence *I* (represented as *I*(*p*) satisfies: $I \left(p\right) = P \left(p\right) \times K , p = 0 , … , {N}_{symb} - 1$ or $I \left(p\right) = P \left(p\right) \times K + {Δ}_{offset} , p = 0 , … , {N}_{symb} - 1$

Elements in the sequence *P* are unequally spaced. The sequence *P* may be predefined or indicated based on signaling.

Optionally, the sequence *P* may be determined based on a solution of equal sums of powers (Equal Sums of (Like) Powers).

For example, the sequence is *P* = [0, 1, 2, 4, 5, 6, 7, 8, 9, 11, 12, 13].

In an implementation, *Nₚₒₛ* position sequences *I* may be defined, and one position sequence is determined from the *Nₚₒₛ* position sequences by using signaling, where *Nₚₒₛ* is an integer greater than 1.

For example, K has multiple possible values, and different values correspond to different position sequences. For example, Δ*_{offset}* has multiple possible values, and different values correspond to different position sequences. For example, multiple sequences *P* are defined, and different sequences *P* correspond to different position sequences.

In an implementation, at least two position sequences may be determined, and the reference signal sequence is sent based on the *N_{symb}* symbols determined by using the at least two position sequences. Any two elements in the determined at least two position sequences are different.

For example, if the position sequence satisfies *I*(*p*) = *p* × *K +* Δ*_{offset},* two position sequences may be determined, and the two position sequences correspond to different values of the offset Δ*_{offset}.* It may be learned that when the value of Δ*_{offset}* is one from 0 to *K* - 1, any two elements of the two determined position sequences are different.

Optionally, a sequence obtained by splicing the determined at least two position sequences may be used as a new position sequence, and the positions of the *N_{symb}* symbols are determined based on the new position sequence.

In this embodiment of this application, the N first sequences corresponding to the reference signals of at least two types are determined, and the position sequence corresponding to the N first sequences is determined. In this case, *N_{type} >* 1, that is, the N first sequences corresponding to the reference signals of *N_{type}* types are determined, and the position sequence corresponding to the N first sequences is determined.

A reference signal of an n^{th} type corresponds to an *Nₙ*^{th} first sequences, where *n =* 0, ... , *N_{type}* - 1, and the following is satisfied: $N = {\sum }_{i = 0}^{{N}_{type} - 1} {N}_{i}$

Optionally, *Nₙ* elements in a position sequence corresponding to reference signals of an *n*^{th} type are determined. It may be understood that, after elements of a position sequence corresponding to reference signals of each type is determined, a type of a reference signal sent on each symbol (that is, each time unit) is determined.

For ease of description, a sequence including elements in a position sequence corresponding to reference signals of each type is referred to as a first position sequence, and a sequence including the *Nₙ* elements in the position sequence corresponding to the reference signals of the *n*^{th} type (that is, a corresponding first position sequence) is represented as *Iₙ.* It may be understood that positions of time units (that is, symbols) in which reference signals of one type corresponding to a first position sequence are sent may be determined based on the first position sequence.

It may be understood that reference signals of *N_{type}* types correspond to *N_{type}* first position sequences *I*₀ to *I*_{*Ntype*-1}*.* It may be understood that a sequence including all different elements (arranged in ascending order) of *I*₀ to *I*_{*Ntype-*1} is the same as the position sequence *I.*

When one first reference signal sequence includes a reference signal of one type, reference signals of different types are located on different symbols. In this case, any two elements of first position sequences corresponding to the reference signals of different types are different.

When one first reference signal sequence includes reference signals of at least two types, reference signals of at least two types are located on a same symbol (that is, a same time unit). In this case, at least two elements in first position sequences corresponding to the reference signals of different types are the same.

Optionally, the first position sequences *I*₀ to *I*_{*Ntype-*1} corresponding to the reference signals of *N_{type}* types may be determined, and the position sequence *I* is determined based on *I*₀ to *I*_{*Ntype-*1}*.* The position sequence *I* includes all different elements of the first position sequences *I*₀ to *I*_{*Ntype-*1}*.*

Optionally, the position sequence *I* may be determined, and the first position sequences *I*₀ to *I*_{*Ntype-*1} corresponding to the reference signals of *N_{type}* types may be determined.

For example, a base station device may first determine the position sequence *I*, that is, determine the positions of the *N_{symb}* symbols. Further, the base station determines the first position sequences corresponding to reference signals of *N_{type}* types.

Particularly, when *N_{type} =* 1, the *N_{symb}* first reference signal sequences include reference signals of one type, the N first sequences include reference signals of one type, and the position sequence determines a position of a reference signal of this type on the *N_{symb}* symbols. In this case, the first position sequence does not need to be determined. One first reference signal sequence corresponds to one first sequence (that is, *N_{symb}* = *M* = *N*), and the *N_{symb}* symbols are located in at least two slots.

Optionally, the base station device may further send reference signal sequences in *Nᵣₑₘₐᵢₙ* time units (that is, *Nᵣₑₘₐᵢₙ* symbols) determined based on a second position sequence *Iᵣₑₘₐᵢₙ.* Reference signals corresponding to the *Nᵣₑₘₐᵢₙ* symbols are of a same type, and the type is one of the reference signals of *N_{type}* types. A reference signal sequence sent on a symbol determined based on *Iᵣₑₘₐᵢₙ* may be referred to as an additional reference signal sequence. The second position sequence indicates positions of the *Nᵣₑₘₐᵢₙ* symbols in the *Nₛₗₒₜ* slots.

Optionally, multiple second position sequences may be determined, and types of reference signals corresponding to different position sequences may be the same or different.

For example, reference signal sequences are sent in *Nᵣₑₘₐᵢₙ* time units (that is, *Nᵣₑₘₐᵢₙ* symbols) determined based on the second position sequence *Iᵣₑₘₐᵢₙ,* and the type of the reference signal corresponding to the *Nᵣₑₘₐᵢₙ* symbols is represented as *n*₃, where *n*₃ is a value from 0 to *N_{type} -* 1.

Optionally, the second position sequence *Iᵣₑₘₐᵢₙ* and a first position sequence *I*_{*n*3} corresponding to reference signals of a same type may form a third position sequence. It may be understood that the reference signals of *N_{type}* types correspond to *N_{type}* second position sequences, and similarly, correspond to *N_{type}* third position sequences.

Optionally, the position sequence *I* may be determined, and the *N_{type}* third position sequences corresponding to the reference signals of *N_{type}* types may be determined. In this case, the *N_{type}* first position sequences may be determined based on the *N_{type}* third position sequences. Specifically, an *n*^{th} first position sequence includes elements that belong to the position sequence *I* and that are in an *n*^{th} third position sequence.

Optionally, L third sequences may be sent in L time units (that is, L symbols), reference signals corresponding to the L third sequences are of a same type, and the type of the reference signals corresponding to the L third sequences is one of the reference signals of *N_{type}* types, where the L symbols are L symbols in the *Nᵣₑₘₐᵢₙ* symbols.

Optionally, the L third sequences and a first sequence that is sent in a first time unit among the M time units are multiplexed by using an orthogonal cover code OCC. The first time unit is one time unit in the M time units, that is, the first time unit is one symbol. A type of a reference signal corresponding to the first sequence sent in the first time unit is the same as the type of the reference signal corresponding to the L third sequences.

For example, if the L third sequences correspond to reference signals of an *n*₃^{th} type in the reference signals of *N_{type}* types, where *n*₃ is a value from 0 to *N_{type} -* 1, the symbol on which the first time unit is located corresponds to one element in a first position sequence *I*_{*n*3} corresponding to the reference signals of the *n*₃^{th} type.

For example, the position sequence is *I* = [0,1,2,3,4,5,6,7,8,9,10,11,12,13] × 4, *N_{type} =* 2, a determined first position sequence of reference signals of a 0^{th} type is *I*₀ *=* [0,1,2,4,5,6,7,8,9,11,12,13] × 4, and a first position sequence of reference signals of a 1^{st} type is *I*₁ = [3, 10] × 4. It may be learned that a sequence including all different elements of *I*₀ and *I*₁ is the same as the position sequence I.

For example, the position sequence is *I* = [0,1,2,3,4,5,6,7,8,9,10,11,12,13] × 4, *N_{type} =* 2, a determined first position sequence of reference signals of a 0^{th} type is *I*₀ *=* [0,1,2,4,5,6,7,8,9,11,12,13] × 4, a first position sequence of reference signals of a 1^{st} type is *I*₁ *=* [12, 40], *Nᵣₑₘₐᵢₙ*=2, and the second position sequence is *Iᵣₑₘₐᵢₙ* = [26, 54].

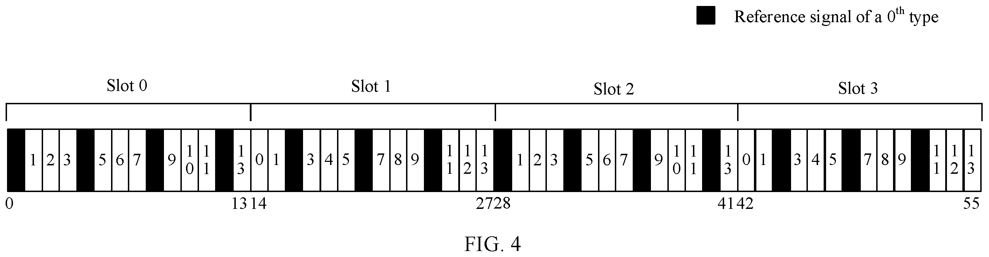

With reference to FIG. 4 to FIG. 12, the following uses examples to describe diagrams of the position sequence.

An example is shown in FIG. 4. FIG. 4 shows equally-spaced mapping with reference signals of one type (*N_{type}* = 1). As shown in FIG. 4, *N_{symb}* = 14 symbols in FIG. 4 are used to send the reference signals of one type (that is, *N_{type}* = 1), and the 14 symbols are included in *N_{slot,tx}* = 4 slots. It is assumed that each slot includes 14 symbols, and symbol indexes in the slot range from 0 to 13. For *Nₛₗₒₜ* = 4 slots, inter-slot symbol indexes are 0 to 55. A position sequence in FIG. 4 is *I* = [0,1,2,3,4,5,6,7,8,9,10,11,12,13] × 4 = [0,4,8,12,16,20,24,28,32,36,40,44,48,52].

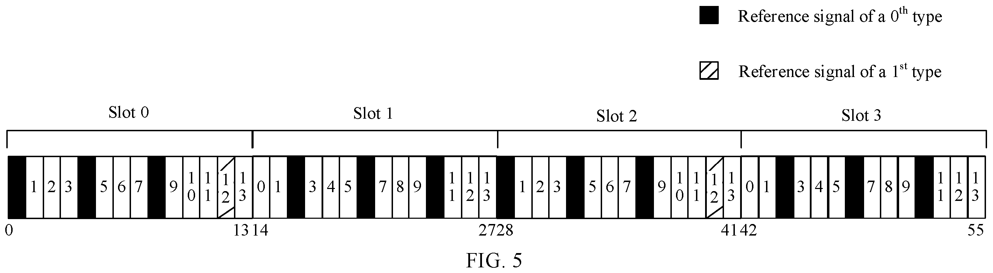

Another example is shown in FIG. 5. FIG. 5 shows equally-spaced mapping with reference signals of two types (where positions do not overlap). As shown in FIG. *5**, N_{symb} =* 14 symbols in FIG. 5 are used to send the reference signals of two types (that is, *N_{type}* = 2), and the 14 symbols are included in *N_{slot,tx} =* 4 slots. A position sequence in FIG. 5 is *I =* [0,1,2,3,4,5,6,7,8,9,10,11,12,13] × 4 = [0,4,8,12,16,20,24,28,32,36,40,44,48,52] , a first position sequence of reference signals of a 0^{th} type is *I*₀ = [0,4,8,16,20,24,28,32,36,44,48,52], and a first position sequence of reference signals of a 1^{st} type is *I*₁ = [12, 40]. It may be learned that any two elements of *I*₀ and *I*₁ are different.

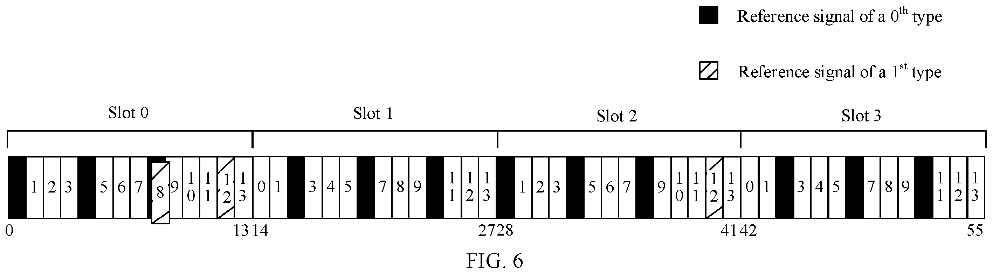

Another example is shown in FIG. 6. FIG. 6 shows equally-spaced mapping with reference signals of two types (where positions overlap). As shown in FIG. 6, *N_{symb} =* 14 symbols in FIG. 6 are used to send the reference signals of two types (that is, *N_{type}* = 2), and the 14 symbols are included in *N_{slot,tx} = 4* slots. A position sequence in FIG. 6 is *I =* [0,1,2,3,4,5,6,7,8,9,10,11,12,13] × 4 = [0,4,8,12,16,20,24,28,32,36,40,44,48,52] , a first position sequence of reference signals of a 0^{th} type is *I*₀ = [0,4,8,16,20,24,28,32,36,44,48,52], and a first position sequence of reference signals of a 1^{st} type is *I*₁ = [8,12, 40]. It may be learned that *I*₀ and *I*₁ have a same element (that is, a value 8), and frequency division or code division may be used for a reference signal of the 0^{th} type and a reference signal of the 1^{st} type on a symbol 8. This is not limited in this application.

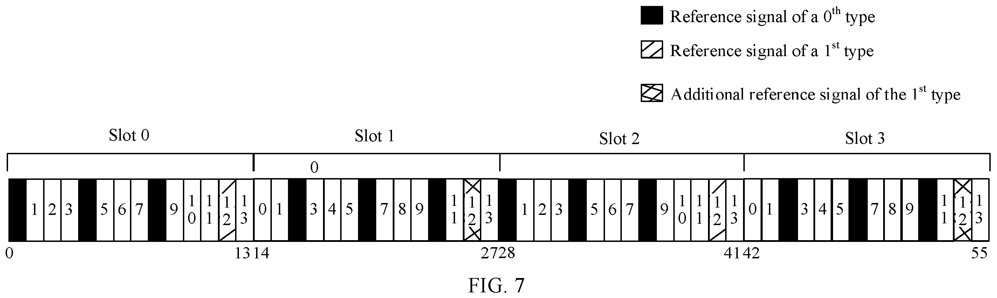

Another example is shown in FIG. 7. FIG. 7 shows equally-spaced mapping with reference signals of two types (with redundant symbols). As shown in FIG. 7, *N_{symb}* = 14 symbols in FIG. 7 are used to send the reference signals of two types (that is, *N_{type}* = 2), and the 14 symbols are included in *N_{slot,tx} =* 4 slots. A position sequence in FIG. 7 is *I =* [0,1,2,3,4,5,6,7,8,9,10,11,12,13] × 4 = [0,4,8,12,16,20,24,28,32,36,40,44,48,52] , a first position sequence of reference signals of a 0^{th} type is *I*₀ = [0,4,8,16,20,24,28,32,36,44,48,52], a first position sequence of reference signals of a 1^{st} type is *I*₁ = [12, 40], *Nᵣₑₘₐᵢₙ*=2, and a second position sequence is *Iᵣₑₘₐᵢₙ* = [26, 54], which corresponds to reference signals of the 1^{st} type. It may be learned that *I*₀ and *I*₁ do not have a same element. Additional reference signal sequences (additional reference signals of the 1^{st} type in FIG. 7) are sent on symbols 26 and 54. The symbol positions corresponding to the additional reference signal sequences do not belong to the position sequence I, and the additional reference signal sequences may not be used for sensing. This is not limited in this application.

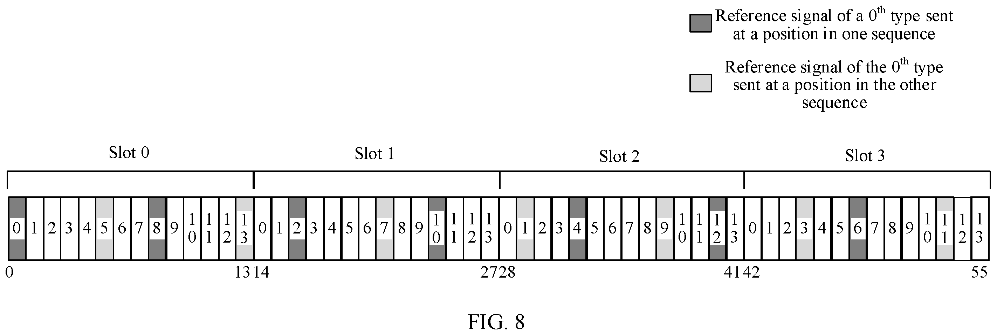

Another example is shown in FIG. 8. FIG. 8 shows equally spacing mapping with two position sequences. As shown in FIG. 8, *N_{symb} =* 14 symbols in the figure are used to send reference signals of one type, and the 14 symbols are included in *N_{slot,tx}* = 4 slots. There are two position sequences in FIG. 8. Each position sequence includes seven elements (that is, positions of seven symbols), and there are 14 symbols in total. One position sequence corresponds to *K = 8,* Δ*_{offset}*= 0, and the position sequence is [0,1,2,3,4,5,6] × 8 + 0 = [0,8,16,24,32,40,48]. The other position sequence corresponds to *K* = 8, Δ*_{offset}*= 5, and the position sequence is [0,1,2,3,4,5,6] × 8 + 5 = [5,13,21,29,37,45,53] . A new position sequence (arranged in ascending order of values) obtained by splicing the two position sequences is [0,5,8,13,16,21,24,29,32,37,40,45,48,53].

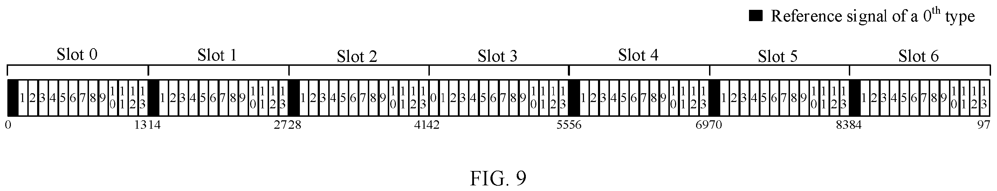

Another example is shown in FIG. 9. FIG. 9 shows unequally-spaced mapping with reference signals of one type (*N_{type} =* 1). As shown in FIG. 9, *N_{symb}* = 6 symbols in FIG. 9 are used to send the reference signals of one type (that is, *N_{type}* = 1), and the 6 symbols are included in *N_{slot,tx}* = 6 slots. It is assumed that each slot includes 14 symbols, and symbol indexes in the slot range from 0 to 13. For *Nₛₗₒₜ* = 7 slots, inter-slot symbol indexes are 0 to 97. A position sequence in FIG. 9 is *I* = [0,1,2,4,5,6] × 14 = [0,14,28,56,70,84], that is, corresponds to a sequence *P* = [0,1,2,4,5,6], *K* = 14, and Δ*_{offset}*= 0. It may be learned that no reference signal sequence is sent in a 3^{rd} slot (a slot 3) in FIG. 9, and the six symbols on which the six reference signals are sent are not completely equally spaced.

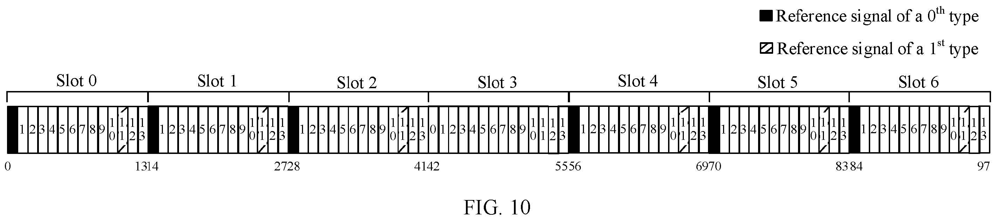

Another example is shown in FIG. 10. FIG. 10 shows unequally-spaced mapping with reference signals of one type (*N_{type} =* 1) and two position sequences. As shown in FIG. 10, *N_{symb}* = 12 symbols in the figure are used to send reference signal sequences of one type (that is, *N_{type}* = 1), and the 12 symbols are included in *N_{slot,tx}* = 6 slots. It is assumed that each slot includes 14 symbols, and symbol indexes in the slot range from 0 to 13. For *Nₛₗₒₜ =* 7 slots, inter-slot symbol indexes are 0 to 97. There are two position sequences in FIG. 10. A 0^{th} position sequence is [0,1,2,4,5,6] × 14 = [0,14,28,56,70,84], that is, corresponds to a sequence P *=* [0,1,2,4,5,6], *K =* 14, and Δ*_{offset}*= 0. A 1^{st} position sequence is [0,1,2,4,5,6] × 14 + 11 = [11,25,39,67,81,95], that is, corresponds to a sequence *P* = [0,1,2,4,5,6], *K =* 14, and Δ*_{offset}=* 11. A new position sequence (arranged in ascending order of values) obtained by splicing the two position sequences is [0,11,14,25,28,39,56,67,70,81,84,95], and positions of the 12 symbols may be determined based on the new position sequence obtained through splicing.

For example, the following describes in detail a specific implementation of generating the foregoing reference signal sequence based on a sequence in a GCP.

For example, the golay complementary pair includes two sequences, which are referred to as a sequence x and a sequence y. The reference signal sequence may be the sequence x or the sequence y, or a sequence generated based on the sequence x and the sequence y. When the reference signal sequence is a golay sequence, the *N_{symb}* first reference signal sequences sent on the *N_{symb}* symbols may be determined based on an extension sequence. The extension sequence includes *Nₑₓₜ* elements, where *Nₑₓₜ* ≥ *N_{symb},* and *Nₑₓₜ* is a positive integer. *N_{symb}* elements in the *Nₑₓₜ* elements are in one-to-one correspondence with the *N_{symb}* first reference signal sequences.

Optionally, the extension sequence includes *Nₑₓₜ = N_{symb}* elements, and the *N_{symb}* elements are in one-to-one correspondence with the *N_{symb}* first reference signal sequences.

For example, a possible value of the extension sequence may be a value A or a value B. Let the sequence x correspond to the value A, and let the sequence y correspond to the value B. It is assumed that the first reference signal sequence is the sequence x or the sequence y. In this case, values of the *N_{symb}* elements in the extension sequence are determined, and the *N_{symb}* first sequences are determined.

For example, N=18, and the extension sequence may be represented as *sₑₓₜ =* [*A, B, B, A, A, B, A, B, B, A, A, B, A, B, B, A, A, B*]. When the values of A and B are 1 and -1 respectively, *sₑₓₜ =* [1, -1, -1, 1, 1, -1, 1, -1, -1, 1, 1, -1, 1, -1, -1, 1, 1, -1] , and correspondingly, 18 first reference signal sequences are *x, y, y, x, x, y, x, y, y, x, x, y, x, y, y, x, x, and y.*

Optionally, the extension sequence includes *Nₑₓₜ* > *N_{symb}* elements, including *N_{symb}* elements that are in one-to-one correspondence with the *N_{symb}* first reference signal sequences.

For example, a possible value of the extension sequence may be a value A, a value B, or a value C. Let the sequence x correspond to the value A, let the sequence y correspond to the value B, and let the value C to indicate that no sequence is sent. It is assumed that the first reference signal sequence is the sequence x or the sequence y. In this case, values of the *Nₑₓₜ* elements in the extension sequence are determined, and the *N_{symb}* first sequences are determined.

In this case, the extension sequence may be determined based on a solution of equal sums of powers. For example, a solution *S*₀ of equal sums of powers may include an index of an element corresponding to the sequence x in the extension sequence, *S*₁ may include an index of an element corresponding to the sequence y in the extension sequence, and a value of a remaining element in the extension sequence is the value C.

For example, if the solutions of equal sums of powers are *S*₀ = [0,4,5] and *S*₁ = [1,2,6], the value A=1, the value B=-1, and the value C=0, the extension sequence may be represented as *sₑₓₜ* = [1, -1, -1,0,1,1, -1].

Optionally, the position sequence may be determined based on the extension sequence. Specifically, the position sequence may be determined based on an index of the value A and an index of the value B in the extension sequence. For example, the sequence *P* in the position sequence includes a position sequence that may be based on the index of the value A and the index of the value B in the extension sequence.

Optionally, the position sequence is determined based on a solution of equal sums of powers. For example, the sequence *P* in the position sequence includes the solutions *S*₀ and *S*₁ of equal sums of powers, that is, an element of the sequence *P* is an element of the solutions *S*₀ and *S*₁ of equal sums of powers.

In some embodiments, the N first sequences are obtained by performing phase rotation on each of N second sequences based on M phase values.

It should be understood that one first reference signal corresponds to at least one first sequence in the N first sequences. In a phase rotation scenario, the first reference signal is obtained by performing phase rotation on one second reference signal, and the second reference signal corresponds to at least one second sequence in the N second sequences.

In some embodiments, the *N_{symb}* first reference signal sequences are obtained by performing phase rotation on each of *N_{symb}* second reference signals based on *N_{symb}* (*N_{symb}* = M) phase values.

It may be understood that one first reference signal corresponds to at least one first sequence, and the *N_{symb}* first reference signal sequences correspond to the N first sequences. Correspondingly, one second reference signal corresponds to at least one second sequence, and the *N_{symb}* second reference signal sequences correspond to the N second sequences.

A phase value of phase rotation is related to a position of the first reference signal sequence. Because the positions of the *N_{symb}* first reference signal sequences are determined based on the position sequence, it can be learned that the phase value of phase rotation is related to the position sequence.

For example, a phase value corresponding to a p^{th} first reference signal sequence is related to the p^{th} value of the position sequence *I*. The p^{th} second reference signal sequence of the *N_{symb}* first reference signal sequences is represented as *sₚ,* the p^{th} first reference signal sequence is represented as *s̃ₚ,* and a length of the p^{th} first reference signal sequence and both a length of the p^{th} second reference signal sequence are *Lₚ,* the following is satisfied: ${{s}^{˜}}_{p} \left(i\right) = {s}_{p} \left(i\right) \times {e}^{jα ⋅ A \left(p\right)} , i = 0 , … , {L}_{p} - 1$

*e*^{*jα·I*(*n*)} represents a phase value corresponding to the p^{th} first reference signal sequence and the p^{th} second reference signal sequence, *α* represents a phase factor. *sₚ*(*i*) represents an i^{th} element in the p^{th} second reference signal sequence, and *s̃ₚ*(*i*) represents an i^{th} element of *s̃ₚ.* A value of *A*(*p*) is determined based on the p^{th} value *I*(*p*) of the position sequence *I*.

For example, *A(p) = I(p),* or *A(p) = P(p).*

It should be understood that the first reference signal sequence may be used as an output, and the second reference signal sequence may be used as an input.

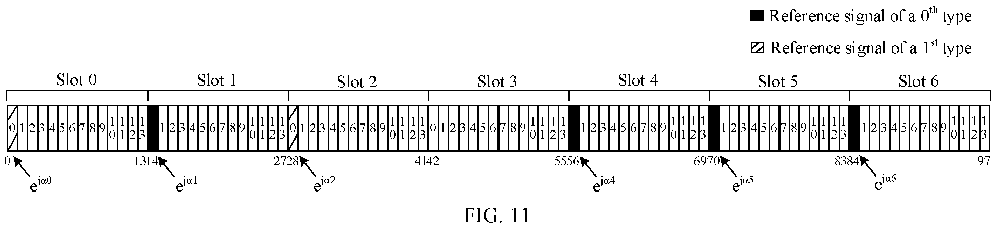

For example, FIG. 11 is an example of unequally-spaced mapping with reference signals of one type (*N_{type}* = 2). As shown in FIG. 11, *N_{symb}* = 6 symbols in FIG. 11 are used to send the reference signals of two types, and the 6 symbols are included in *N_{slot,tx}* = 6 slots. It is assumed that each slot includes 14 symbols, and symbol indexes in the slot range from 0 to 13. For *Nₛₗₒₜ =* 7 slots, inter-slot symbol indexes are 0 to 97. The position sequence satisfies *I*(*p*) = *P(p)* × *K +* Δ*_{offset}*, and a position sequence in FIG. 11 is *I =* [0,1,2,4,5,6] × 14 = [0,14,28,56,70,84], that is, corresponds to a sequence *P* = [0,1,2,4,5,6], *K =* 14, and Δ*_{offset}* = 0. A first position sequence of reference signals of a 0^{th} type in FIG. 11 is [14,56,70,84], and a first position sequence of reference signals of a 1^{st} type in FIG. 11 is [0,28]. It is assumed that *A(p) = P(p).* It may be learned that a sequence A is *A =* [0,1,2,4,5,6], and corresponding phase values are *e*^{*jα*·0}*, e*^{*jα*·1}*, e*^{*jα*·2}*, e*^{*jα*·4}*, e*^{*jα*·5}*,* and *e*^{*jα*·6}.

Optionally, when additional reference signal sequences are further sent, and code division multiplexing is performed on L third sequences in the additional reference signal sequences and one of *N_{symb}* first reference signal sequences corresponding to the position sequence by using an orthogonal cover code (orthogonal cover code), the L third sequences are obtained by performing phase rotation on each of L fourth sequences based on a first phase value, where the first phase value is a phase value used for phase rotation on a first sequence sent in a first time unit, and the first time unit is a symbol on which the first reference signal is located.

In the foregoing technical solution, a phase value used for phase rotation on L fourth sequences is the same as a phase value used for a corresponding first reference signal sequence. Therefore, orthogonality of the OCC can be ensured. For example, two users send additional reference signal sequences and corresponding first reference signal sequences based on different OCC codes. After a base station device receives the reference signal sequences of the two users, because phase values of different reference signal sequences using an OOC are the same, the reference signal sequences sent by the two users are still orthogonal. The base station device may combine multiple received reference signal sequences based on an OOC code used by one user, and cancel interference caused by a reference signal sequence sent by the other user.

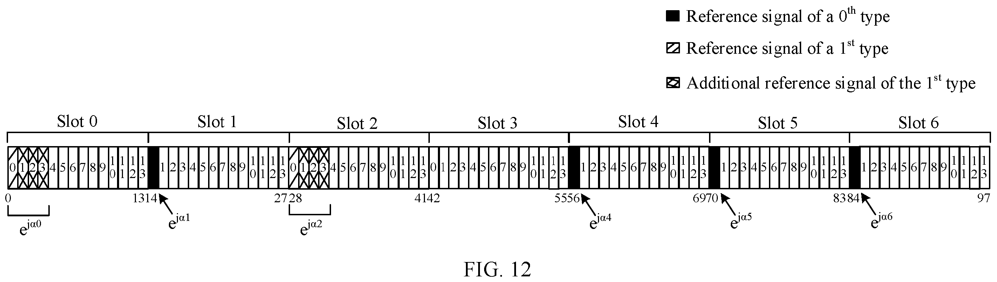

For example, as shown in FIG. 12, *N_{symb}* = 6 symbols in FIG. 12 are used to send reference signals of two types, and the 6 symbols are included in *N_{slot,tx}* = 6 slots. It is assumed that each slot includes 14 symbols, and symbol indexes in the slot range from 0 to 13. For *Nₛₗₒₜ =* 7 slots, inter-slot symbol indexes are 0 to 97. The position sequence satisfies *I*(*p*) *= P*(*p*) × *K +* Δ*_{offset},* and a position sequence in FIG. 12 is *I* = [0,1,2,4,5,6] × 14 = [0,14,28,56,70,84], that is, corresponds to a sequence *P* = [0,1,2,4,5,6], *K =* 14, and Δ*_{offset}* = 0. A first position sequence of reference signals of a 0^{th} type in FIG. 12 is [14,56,70,84], and a first position sequence of reference signals of a 1^{st} type in FIG. 12 is [0,28]. A second position sequence corresponding to additional reference signal sequences is *Iᵣₑₘₐᵢₙ* = [1,2,3,29, 30, 31], and corresponds to reference signals of the 1^{st} type. It is assumed that *A*(*p*) = *P*(*p*)*.* It may be learned that a sequence A is *A* = [0,1,2,4,5,6], and phase values corresponding to six first reference signal sequences are *e*^{*jα*·0}*, e*^{*jα*·1}, *e*^{*jα*·2}*, e*^{*jα*·4}*, e*^{*jα*·5}, and *e*^{*jα*·6}. Additional reference signals of the 1^{st} type are sent on symbols 1, 2, 3, 29, 30, and 31 in FIG. 12. Code division is used for a reference signal of the 1^{st} type on a symbol 0 (first time unit) and reference signals of the 1^{st} type on the symbols 1, 2, and 3 (L=3) by using an OCC, and phase rotation is performed on the reference signals of the 1^{st} type on the symbols 1, 2, and 3 by using a phase value *e*^{*jα*·0} corresponding to the symbol 0. Code division is used for a reference signal of the 1^{st} type on a symbol 28 (first time unit) and reference signals of the 1^{st} type on the symbols 29, 30, and 31 (L=3) by using an OCC, and phase rotation is performed on the reference signals of the 1^{st} type on the symbols 29, 30, and 31 by using a phase value *e*^{*jα*·2} corresponding to the symbol 28

The foregoing mainly describes the solutions provided in this application from the perspective of interaction between devices. Correspondingly, this application further provides a communication apparatus, and the communication apparatus is configured to implement the foregoing methods. The communication apparatus may be the receive end apparatus in the foregoing method embodiments, or an apparatus including the receive end apparatus, or a component that can be used in the receive end apparatus.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

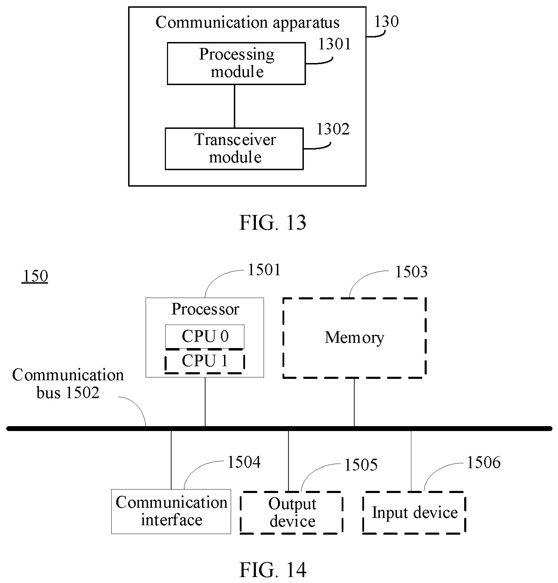

In an implementation scenario, FIG. 13 is a diagram of a structure of a communication apparatus 130. The communication apparatus 130 includes a processing module 1301 and a transceiver module 1302.

In some embodiments, the communication apparatus 130 may further include a storage module (not shown in FIG. 13), configured to store program instructions and data.

In some embodiments, the transceiver module 1302 may also be referred to as a transceiver unit, and is configured to implement a sending function and/or a receiving function. The transceiver module 1302 may include a transceiver circuit, a transceiver machine, a transceiver, or a communication interface.

In some embodiments, the transceiver module 1302 may include a receiving module and a sending module. The processing module 1301 may be configured to perform the processing (for example, determining or generation) steps in the foregoing method embodiments, and/or configured to support another process of the technology described in this specification.

In a possible implementation, the processing module 1301 is configured to determine reference signals of at least two types; the processing module 1301 is further configured to determine N first sequences corresponding to the reference signals of at least two types, where N is a positive integer greater than 1; the processing module 1301 is further configured to determine a position sequence corresponding to the N first sequences; and the processing module 1301 is further configured to determine positions of M time units based on the position sequence, where the position sequence includes M elements, the M elements are in one-to-one correspondence with the positions of the M time units, and M is a positive integer greater than 1 and less than or equal to N. The transceiver module 1302 is configured to send the N first sequences in the M time units, where at least one first sequence is sent in each of the M time units.

For example, the types of the reference signals include at least two of the following: a demodulation reference signal, a synchronization reference signal, a channel measurement reference signal, or a phase tracking reference signal.

In another possible implementation, the processing module 1301 is configured to determine reference signals of one type, where the type of the reference signal includes any one of the following: a demodulation reference signal, a synchronization reference signal, a channel measurement reference signal, or a phase tracking reference signal; the processing module 1301 is further configured to determine N first sequences corresponding to the reference signals of the type, where N is a positive integer greater than 1; the processing module 1301 is further configured to determine a position sequence corresponding to the N first sequences; and the processing module 1301 is configured to determine positions of M time units based on the position sequence, where the position sequence includes M elements, the M elements are in one-to-one correspondence with the positions of the M time units, M is a positive integer greater than 1 and less than or equal to N, and M symbols are located in at least two slots. The sending module 1302 is configured to send the N first sequences in the M time units, where at least one first sequence is sent in each of the M time units, and M=N is satisfied.

Optionally, the positions of the M time units are equally spaced.

Optionally, the positions of the M time units are unequally spaced, and the positions of the M time units are determined based on a solution of equal sums of powers.

Optionally, differences between adjacent elements in the position sequence are the same, and the positions of the M time units are equally spaced; or differences between adjacent elements in the position sequence are not completely the same, and the positions of the M time units are unequally spaced.

Optionally, indexes of the M time units are determined based on the M elements included in the position sequence, where the M elements correspond to the reference signals of at least two types; and the positions of the M time units are determined based on the indexes of the M time units.

Optionally, the N first sequences are determined based on a golay complementary pair GCP.

Optionally, the position sequence is generated based on an extension sequence, and the extension sequence is used to determine the N first sequences.

Optionally, the N first sequences are obtained by performing phase rotation on each of N second sequences based on M phase values, where the M phase values are related to the positions of the M time units.

Optionally, the processing module 1301 is further configured to perform phase rotation on each of N second sequences based on M phase values to obtain the N first sequences, where the M phase values are related to the positions of the M time units.

Optionally, the sending module 1302 is further configured to send L third sequences in L time units, where L is a positive integer, and the L time units are different from the M time units; and the processing module 1301 is further configured to multiplex, by using an orthogonal cover code OCC, the L third sequences and a first sequence that is sent in a first time unit among the M time units.

Optionally, the L third sequences are obtained by performing phase rotation on each of L fourth sequences based on a first phase value, where the first phase value is a phase value used for phase rotation on the first sequence sent in the first time unit.

Optionally, the processing module 1301 is further configured to perform phase rotation on each of L fourth sequences based on a first phase value to obtain the L third sequences, where the first phase value is a phase value used for phase rotation on the first sequence sent in the first time unit.

Optionally, the time unit includes at least one of the following symbols: a single-carrier symbol, an orthogonal frequency division multiplexing OFDM symbol, and a single-carrier frequency division multiple access SC-FDMA symbol.

In this application, the communication apparatus 130 is presented with functional modules obtained through division in an integrated manner. The module herein may be an ASIC, a circuit, a processor that executes one or more software or firmware programs, a memory, an integrated logic circuit, and/or another component capable of providing the foregoing functions.

In some embodiments, in hardware implementation, a person skilled in the art may figure out that the communication apparatus 130 may be in a form of a communication apparatus 150 shown in FIG. 14.

Refer to FIG. 14. The communication apparatus 150 includes one or more processors 1501. Further, the communication apparatus 150 may further include a communication bus 1502 and at least one communication interface (where FIG. 14 is merely an example, and an example in which the communication apparatus 150 includes a communication interface 1504 and one processor 1501 is used for description). Optionally, the communication apparatus 150 may further include a memory 1503.

The processor 1501 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core (single-CPU) processor, or may be a multi-core (multi-CPU) processor.

During specific implementation, in an embodiment, the processor 1501 may include one or more CPUs, for example, a CPU 0 and a CPU 1 in FIG. 14.

The communication bus 1502 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 14, but this does not mean that there is only one bus or only one type of bus. The communication bus 1502 is configured to connect different components in the communication apparatus 150, so that different components in the communication apparatus 150 may communicate and interact with each other.

The communication interface 1504 may be a transceiver module, and is configured to communicate with another device or a communication network. The communication network may be, for example, an Ethernet (Ethernet), a RAN, or a WLAN. For example, the communication interface 1504 may be an apparatus such as a transceiver or a transceiver machine. Alternatively, the communication interface 1504 may be a transceiver circuit located in the processor 1501, to implement signal input and signal output of the processor.

The memory 1503 may be an apparatus having a storage function. For example, the memory 1503 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium capable of carrying or storing expected program code in a form of instruction or data structure and capable of being accessed by a computer. This is not limited thereto. The memory may exist independently, and is connected to the processor through the communication bus 1502. The memory may alternatively be integrated with the processor.

For example, the memory 1503 is configured to store computer-executable instructions for executing the solutions of this application, and the processor 1501 controls the execution. The processor 1501 is configured to execute the computer-executable instructions stored in the memory 1503, to implement the method provided in embodiments of this application.

Alternatively, optionally, in embodiments of this application, the processor 1501 may perform functions related to processing in the method provided in embodiments in this application, and the communication interface 1504 is responsible for communication with another device or a communication network. This is not specifically limited in embodiments of this application.

Optionally, the computer-executable instructions in this embodiment of this application may also be referred to as application program code. This is not specifically limited in this embodiment of this application.

In a specific implementation, in an embodiment, the communication apparatus 150 may further include an output device 1505 and an input device 1506. The output device 1505 communicates with the processor 1501, and may display information in multiple manners. For example, the output device 1505 may be a liquid crystal display (liquid crystal display, LCD), a light emitting diode (light emitting diode, LED) display device, a cathode ray tube (cathode ray tube, CRT) display device, a projector (projector), or the like. The input device 1506 communicates with the processor 1501, and may receive a user input in multiple manners. For example, the input device 1506 may be a mouse, a keyboard, a touchscreen device, or a sensor device.

It should be noted that, the composition structure shown in FIG. 14 constitutes no limitation on the communication apparatus. In addition to the components shown in FIG. 14, the communication apparatus may include more or fewer components than those shown in the figure, combine some components, or have different component arrangements.

As a possible product form, the communication apparatus in embodiments of this application may alternatively be implemented by using the following: one or more field programmable gate arrays (field programmable gate array, FPGA), a programmable logic device (programmable logic device, PLD), a controller, a state machine, gate logic, and a discrete hardware component, any other proper circuit, or any combination of circuits that can perform various functions described throughout this application.

This application further provides a computer-readable storage medium. The computer-readable storage medium stores a computer program or instructions. When the computer program or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division and may be other division during actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

The units described as separate parts may be physically separated or not, this is, may be located together in a same place or distributed on multiple network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of procedures (or functions) described in embodiments of this application are implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered to have covered any of or all modifications, variations, combinations or equivalents within the scope of this application. It is clear that a person skilled in the art can make various modifications and variations to this application without departing from the spirit and scope of this application. This application is intended to cover these modifications and variations of this application provided that they fall within the scope of the claims of this application and their equivalent technologies.

## Claims

1. A sequence sending method, comprising:
determining reference signals of at least two types, wherein the types of the reference signals comprise at least two of the following: a demodulation reference signal, a synchronization reference signal, a channel measurement reference signal, or a phase tracking reference signal;
determining N first sequences corresponding to the reference signals of at least two types, wherein N is a positive integer greater than 1;
determining a position sequence corresponding to the N first sequences;
determining positions of M time units based on the position sequence, wherein the position sequence comprises M elements, the M elements are in one-to-one correspondence with the positions of the M time units, and M is a positive integer greater than 1 and less than or equal to N; and
sending the N first sequences in the M time units, wherein at least one first sequence is sent in each of the M time units.

2. The method according to claim 1, wherein the positions of the M time units are equally spaced.

3. The method according to claim 1, wherein the positions of the M time units are unequally spaced, and the positions of the M time units are determined based on a solution of equal sums of powers.

4. The method according to claim 2 or 3, wherein
differences between adjacent elements in the position sequence are the same, and the positions of the M time units are equally spaced; or
differences between adjacent elements in the position sequence are not completely the same, and the positions of the M time units are unequally spaced.

5. The method according to any one of claims 1 to 4, wherein the determining the positions of the M time units based on the position sequence comprises:
determining indexes of the M time units based on the M elements comprised in the position sequence, wherein the M elements correspond to the reference signals of at least two types; and
determining the positions of the M time units based on the indexes of the M time units.

6. The method according to any one of claims 1 to 5, wherein the N first sequences are determined based on a golay complementary pair GCP.

7. The method according to claim 6, wherein the position sequence is generated based on an extension sequence, and the extension sequence is used to determine the N first sequences.

8. The method according to any one of claims 1 to 7, wherein the N first sequences are obtained by performing phase rotation on each of N second sequences based on M phase values, and the M phase values are related to the positions of the M time units.

9. The method according to any one of claims 1 to 8, wherein the method further comprises:
sending L third sequences in L time units, wherein L is a positive integer, and the L time units are different from the M time units; and
multiplexing, by using an orthogonal cover code OCC, the L third sequences and a first sequence that is sent in a first time unit among the M time units.

10. The method according to claim 9, wherein the L third sequences are obtained by performing phase rotation on each of L fourth sequences based on a first phase value, and the first phase value is a phase value used for phase rotation on the first sequence sent in the first time unit.

11. The method according to any one of claims 1 to 10, wherein the time unit comprises at least one of the following symbols: a single-carrier symbol, an orthogonal frequency division multiplexing OFDM symbol, and a single-carrier frequency division multiple access SC-FDMA symbol.

12. A sequence sending apparatus, comprising:
a processing module, configured to determine reference signals of at least two types, wherein the types of the reference signals comprise at least two of the following: a demodulation reference signal, a synchronization reference signal, a channel measurement reference signal, or a phase tracking reference signal;
the processing module is further configured to determine N first sequences corresponding to the reference signals of at least two types, wherein N is a positive integer greater than 1;
the processing module is further configured to determine a position sequence corresponding to the N first sequences; and
the processing module is further configured to determine positions of M time units based on the position sequence, wherein the position sequence comprises M elements, the M elements are in one-to-one correspondence with the positions of the M time units, and M is a positive integer greater than 1 and less than or equal to N; and
a sending module, configured to send the N first sequences in the M time units, wherein at least one first sequence is sent in each of the M time units.

13. The apparatus according to claim 12, wherein the positions of the M time units are equally spaced.

14. The apparatus according to claim 12, wherein the positions of the M time units are unequally spaced, and the positions of the M time units are determined based on a solution of equal sums of powers.

15. The apparatus according to claim 13 or 14, wherein
differences between adjacent elements in the position sequence are the same, and the positions of the M time units are equally spaced; or
differences between adjacent elements in the position sequence are not completely the same, and the positions of the M time units are unequally spaced.

16. The apparatus according to any one of claims 12 to 15, wherein the processing module is specifically configured to:
determine indexes of the M time units based on the M elements comprised in the position sequence, wherein the M elements correspond to the reference signals of at least two types; and
determine the positions of the M time units based on the indexes of the M time units.

17. The apparatus according to any one of claims 12 to 16, wherein the N first sequences are determined based on a golay complementary pair GCP.

18. The apparatus according to claim 17, wherein the position sequence is generated based on an extension sequence, and the extension sequence is used to determine the N first sequences.

19. The apparatus according to any one of claims 12 to 18, wherein the N first sequences are obtained by performing phase rotation on each of N second sequences based on M phase values, and the M phase values are related to the positions of the M time units.

20. The apparatus according to any one of claims 12 to 19, wherein
the sending module is further configured to send L third sequences in L time units, wherein L is a positive integer, and the L time units are different from the M time units; and
the processing module is further configured to multiplex, by using an orthogonal cover code OCC, the L third sequences and a first sequence that is sent in a first time unit among the M time units.

21. The apparatus according to claim 20, wherein the L third sequences are obtained by performing phase rotation on each of L fourth sequences based on a first phase value, and the first phase value is a phase value used for phase rotation on the first sequence sent in the first time unit.

22. The apparatus according to any one of claims 12 to 21, wherein the time unit comprises at least one of the following symbols: a single-carrier symbol, an orthogonal frequency division multiplexing OFDM symbol, and a single-carrier frequency division multiple access SC-FDMA symbol.

23. A communication apparatus, wherein the communication apparatus comprises a processor, configured to cause, by running a computer program or instructions or by using a logic circuit, the communication apparatus to perform the method according to any one of claims 1 to 11.

24. A computer-readable storage medium, wherein the computer-readable storage medium stores computer instructions or a program, and when the computer instructions or the program is run on a computer, the method according to any one of claims 1 to 11 is performed.

25. A computer program product, wherein the computer program product comprises computer instructions, and when a part or all of the computer instructions are run, the method according to any one of claims 1 to 11 is performed.
